(19) Europäisches Patentamt
European Patent Office
Office européen des brevets

(11) **EP 4 394 945 A1**

(12) **EUROPEAN PATENT APPLICATION**
published in accordance with Art. 153(4) EPC

(43) Date of publication:
**03.07.2024 Bulletin 2024/27**

(51) International Patent Classification (IPC):
**H01M 4/525** (2010.01)    **H01M 10/0567** (2010.01)
**H01M 10/0525** (2010.01)

(21) Application number: **22894475.7**

(52) Cooperative Patent Classification (CPC):
**Y02E 60/10**

(22) Date of filing: **28.09.2022**

(86) International application number:
**PCT/CN2022/122164**

(87) International publication number:
**WO 2023/087937 (25.05.2023 Gazette 2023/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.11.2021  CN 202111372370**

(71) Applicant: **Ningde Amperex Technology Limited**
**Zhangwan Town, Jiaocheng District**
**Ningde City**
**Fujian 352100 (CN)**

(72) Inventors:
• XU, Chunrui
  Ningde City, Fujian 352100 (CN)
• XU, Yanyan
  Ningde City, Fujian 352100 (CN)
• ZHOU, Shaoyun
  Ningde City, Fujian 352100 (CN)

(74) Representative: **Icosa**
**83 avenue Denfert-Rochereau**
**75014 Paris (FR)**

(54) **ELECTROCHEMICAL DEVICE AND ELECTRONIC DEVICE**

(57)    This application provides an electrochemical apparatus and an electronic apparatus. The electrochemical apparatus includes a positive electrode plate, a negative electrode plate, a separator, and an electrolyte, where the positive electrode plate includes a positive electrode active material, the positive electrode active material includes element Co, and the electrolyte includes a polynitrile compound. Amount of the polynitrile compound is adjusted according to the amount of element Co in the positive electrode active material, and, the polynitrile compound is in coordination complexation with Co with other additives used in combination. In this way, structural stability of the positive electrode material with lithium highly released is significantly improved, inhibiting leaching of Co, reducing oxidization of the electrolyte by the positive electrode active material, and inhibiting related side reactions, thereby effectively improving performance of the electrochemical apparatus under high temperature.

EP 4 394 945 A1

## Description

This application claims priority to Chinese Patent Application No. 202111372370.4, filed with the China National Intellectual Property Administration on November 18, 2021 and entitled "ELECTROCHEMICAL APPARATUS AND ELECTRONIC APPARATUS", which is incorporated herein by reference in its entirety.

## TECHNICAL FIELD

This application relates to the field of energy storage technologies, and in particular, to an electrochemical apparatus and an electronic apparatus.

## BACKGROUND

Currently, lithium-ion batteries have been widely used in fields such as electric vehicles, consumer electronic products, and energy storage apparatuses and have gradually become mainstream batteries in these fields by virtue of their advantages such as high energy density and zero memory effect. Currently, among many mature positive electrode materials, Co containing materials such as lithium cobalt oxide and lithium nickel cobalt manganate have higher volumetric energy density, and have thus become an inevitable choice of material with high energy density. To further improve energy density, charge cut-off voltage is constantly increased, followed by a severe challenge to high-temperature performance.

In view of this, in the field of energy storage technologies, further improving high-temperature performance of lithium-ion batteries has become a top priority of researches of major lithium-ion battery manufacturers and related workers.

## SUMMARY

This application provides an electrochemical apparatus and an electronic device so as to improve performance of the electrochemical apparatus at high temperature.

A first aspect of this application provides an electrochemical apparatus. The electrochemical apparatus includes a positive electrode plate, a negative electrode plate, a separator, and an electrolyte, where the positive electrode plate includes a positive electrode active material, the positive electrode active material includes element Co, and based on a total mass of the positive electrode active material, a mass percentage of element Co is a; and the electrolyte includes a polynitrile compound, and based on a total mass of the electrolyte, a mass percentage of the polynitrile compound is b%; where the mass percentage b% of the polynitrile compound and the mass percentage a of element Co satisfy $b = 9.7a - 0.07 + C$, where $-1.5 < C \le 1.5$, and $0 < a \le 0.65$, for example, C may be -1.4, -1.0, -0.5, 0, 0.5, 1.0, 1.5, or in a range defined by any two of these values, and a may be 0.001, 0.25, 0.30, 0.35, 0.40, 0.45, 0.50, 0.55, 0.60, 0.65, or in a range defined by any two of these values. Through in-depth research, the inventors of this application have found that the mass percentage of element Co in the positive electrode active material and the mass percentage of the polynitrile compound are coordinately controlled within the foregoing ranges, so that the polynitrile compound can effectively protect the positive electrode active material, and damage caused by the polynitrile compound to a negative electrode interface is avoided, thereby significantly improving performance of the electrochemical apparatus at high temperature.

In an embodiment of this application, based on the total mass of the electrolyte, the mass percentage b% of the polynitrile compound satisfies $0 < b \le 7$, for example, b may be 0.01, 0.5, 1, 2, 3, 4, 5, 6, 7, or in a range defined by any two of these values. The mass percentage of the polynitrile compound being controlled within the foregoing range can strengthen structural stability of a positive electrode, thereby improving the performance of the electrochemical apparatus at high temperature.

In an embodiment of this application, the polynitrile compound includes a dinitrile compound and/or a trinitrile compound, and based on the total mass of the electrolyte, a mass percentage of the dinitrile compound is b1%, and a mass percentage of the trinitrile compound is b2%, where b1 and b2 satisfy $0 \le b1/b2 \le 4$, for example, b1/b2 may be 0, 0.5, 1.0, 1.5, 2.0, 2.5, 3.0, 3.5, 4.0, or in a range defined by any two of these values. Without being limited to any theory, the applicant has found that the mass percentages of the dinitrile compound and the trinitrile compound being coordinately controlled to satisfy the foregoing relational expression can further improve the performance of the electrochemical apparatus at high temperature.

In an embodiment of this application, the dinitrile compound includes at least one of succinonitrile (SN), adiponitrile (AND), 1,2-bis(cyanoethoxy)ethane (DENE), or 1,4-dicyano-2-butene (HEDN), and the trinitrile compound includes at least one of 1,3,6-hexanetricarbonitrile (HTCN) or 1,2,3-tris(2-cyanoethoxy)propane (TCEP). Without being limited to any theory, the applicant has found that the use of the foregoing dinitrile compound and trinitrile compound can further improve the performance of the electrochemical apparatus at high temperature.

In an embodiment of this application, the electrolyte satisfies at least one of the following conditions.

(1) The electrolyte further includes ethylene carbonate (EC), and based on the total mass of the electrolyte, a mass percentage of the ethylene carbonate is c%, where c satisfies $0.5 \leq c/b \leq 20$, and $3 \leq c \leq 30$, for example, c/b may be 0.5, 1.5, 3.5, 5.5, 7.5, 9.5, 11.5, 13.5, 15.5, 17.5, 19.5, 20, or in a range defined by any two of these values, and c may be 3, 5, 7, 9, 12, 15, 18, 21, 24, 27, 30, or in a range defined by any two of these values. When the mass percentage of EC is excessively low, EC cannot form a good solid electrolyte interface (SEI) film on a negative electrode and cannot prevent the polynitrile compound from damaging a SEI film. When the mass percentage of EC is excessively high, the mass percentage of the polynitrile compound is excessively low, which cannot effectively complex active sites of the positive electrode active material. The mass percentage of the ethylene carbonate in the electrolyte being controlled within the foregoing range can improve the performance of the electrochemical apparatus at high temperature.

(2) The electrolyte includes lithium difluorophosphate, and based on the total mass of the electrolyte, a mass percentage of the lithium difluorophosphate is d%, where d satisfies $0.01 \leq d \leq 1$, for example, d may be 0.01, 0.05, 0.1, 0.2, 0.3, 0.4, 0.6, 0.8, 1.0, or in a range defined by any two of these values. The mass percentage of the lithium difluorophosphate in the electrolyte is controlled within the foregoing range, so that a stable SEI film can be formed on a surface of the negative electrode, which prevents Co leached out from the positive electrode from damaging the SEI film, thereby improving the performance of the electrochemical apparatus at high temperature.

(3) The electrolyte includes lithium difluorophosphate, and based on the total mass of the electrolyte, a mass percentage of the lithium difluorophosphate is d%, where d satisfies $0.015 \leq d/a$. The mass percentage of the lithium difluorophosphate and the mass percentage of element Co in the positive electrode active material are coordinately controlled to satisfy the foregoing relational expression, so that a stable SEI film can be formed on the negative electrode, which prevents Co leached out from the positive electrode from damaging the SEI film, thereby improving the performance of the electrochemical apparatus at high temperature.

(4) The electrolyte includes at least one of fluoroethylene carbonate (FEC), vinylene carbonate (VC), propylene sulfite (PS), ethylene sulfate (DTD), lithium difluoro(oxalato)borate (LiDFOB), or lithium bis(oxalato)borate (LiBOB). The foregoing additives are selected so that stable cathode electrolyte interface (CEI) and SEI films can be formed on surfaces of the positive electrode and the negative electrode to stabilize the positive electrode and the negative electrode and inhibit side reactions between the positive electrode, the negative electrode, and the electrolyte, thereby improving the performance of the electrochemical apparatus at high temperature.

Without being limited to any theory, the applicant has found that the electrolyte being controlled to satisfy one, two, or a combination of more than two of the foregoing conditions can further improve the performance of the electrochemical apparatus at high temperature.

In an embodiment of this application, the electrolyte includes a lithium salt, the lithium salt includes at least one of an inorganic salt or an organic lithium salt, and based on the total mass of the electrolyte, a mass percentage of the lithium salt is 7.5% to 25%, for example, the mass percentage of the lithium salt may be 7.5%, 10.0%, 12.5%, 15.0%, 17.5%, 20.0%, 22.5%, 25%, or in a range defined by any two of these values. The use of the foregoing lithium salt and the mass percentage of the lithium salt being controlled within the foregoing range can improve ionic conductivity of the electrolyte, thereby improving the performance of the electrochemical apparatus at high temperature.

In an embodiment of this application, the lithium salt includes at least one of lithium hexafluorophosphate, lithium tetrafluoroborate, lithium hexafluoroarsenate, lithium perchlorate, lithium bis(fluorosulfonyl)imide, or lithium bistrifluoromethanesulfonimide. Without being limited to any theory, the applicant has found that the use of the foregoing lithium salt can further improve the performance of the electrochemical apparatus at high temperature.

In an embodiment of this application, the electrolyte further includes at least one of dimethyl carbonate, diethyl carbonate, ethyl methyl carbonate, propylene carbonate, ethyl acetate, ethyl propionate, or propyl propionate. In this application, based on the total mass of the electrolyte, a mass percentage of the foregoing non-aqueous solvent is 10% to 70%, for example, may be 10%, 20%, 30%, 40%, 50%, 60%, 70%, or in a range defined by any two of these values. Without being limited to any theory, the applicant has found that the use of the foregoing solvent can further improve the performance of the electrochemical apparatus at high temperature.

In an embodiment of this application, a differential scanning calorimetry (DSC) curve of the positive electrode plate includes at least one main exothermic peak. When the at least one main exothermic peak appears in a DSC test for the positive electrode plate, a higher decomposition temperature (higher stability) can be achieved through adjusting of composition of the electrolyte, where the main exothermic peak is an exothermic peak with heat released greater than 2 mW/mg during the DSC test.

In an embodiment of this application, in the DSC curve, temperature of the main exothermic peak is T°C, and T satisfies $T = 10b + 267 + X$, where $-20 \leq X \leq 20$, $0 < b \leq 7$, and $200 \leq T \leq 360$, for example, T may be 200, 220, 240, 260, 280, 300, 320, 340, 360, or in a range defined by any two of these values. When the temperature of the main exothermic peak and the mass percentage of the polynitrile compound satisfy the foregoing relational expression, the polynitrile compound can be well coordinated with a Co-containing positive electrode material to improve structural stability of a surface of the positive electrode material, thereby improving the performance of the electrochemical apparatus at high temperature.

In this application, a positive electrode current collector is not particularly limited, provided that the objectives of this application can be achieved. For example, the positive electrode current collector may include but is not limited to aluminum foil, aluminum alloy foil, or a composite current collector. In this application, thickness of the positive electrode current collector is not particularly limited, provided that the objectives of this application can be achieved. For example, the thickness of the positive electrode current collector is 4 $\mu$m to 12 $\mu$m. In this application, a positive electrode material layer may be provided on one or two surfaces of the positive electrode current collector in a thickness direction of the positive electrode current collector. It should be noted that the "surface" herein may be an entire region or a partial region of the positive electrode current collector. This is not particularly limited in this application, provided that the objectives of this application can be achieved.

In this application, the positive electrode material layer includes the positive electrode active material in any one of the foregoing embodiments of this application, the positive electrode active material may include a composite oxide, and the composite oxide contains lithium and at least one element selected from cobalt, manganese, and nickel. A specific type of the positive electrode active material is not particularly limited, provided that the objectives of this application can be achieved. Specifically, the positive electrode active material is selected from one or more of lithium cobalt oxide ($LiCoO_2$), lithium nickel manganese cobalt ternary material, lithium manganate ($LiMn_2O_4$), lithium nickel manganate ($LiNi_{0.5}M_{0.5}O_4$), or lithium iron phosphate ($LiFePO_4$). In this application, thickness of a positive electrode active material layer is not particularly limited, provided that the objectives of this application can be achieved. For example, the thickness of the positive electrode active material layer is 30 $\mu$m to 120 $\mu$m.

The positive electrode material layer may further include a binder, and the binder is not particularly limited in this application, provided that the objectives of this application can be achieved. For example, the binder may include but is not limited to at least one of polyacrylic acid, sodium polyacrylate, potassium polyacrylate, lithium polyacrylate, polyimide, polyvinyl alcohol, carboxymethyl cellulose, sodium carboxymethyl cellulose, polyimide, polyamideimide, styrene butadiene rubber, or polyvinylidene fluoride.

In this application, the positive electrode material layer may further include a conductive agent, and the conductive agent is not particularly limited in this application, provided that the objectives of this application can be achieved. For example, the conductive agent may include but is not limited to at least one of conductive carbon black (Super P), carbon nanotubes (CNTs), carbon fibers, flake graphite, Ketjen black, graphene, a metal material, or a conductive polymer. The carbon nanotubes may include but are not limited to single-walled carbon nanotubes and/or multi-walled carbon nanotubes. The carbon fibers may include but are not limited to vapor grown carbon fibers (VGCF) and/or carbon nanofibers. The metal material may include but is not limited to metal powder and/or metal fibers, and specifically, the metal may include but is not limited to at least one of copper, nickel, aluminum, or silver. The conductive polymer may include but is not limited to at least one of a polyphenylene derivative, polyaniline, polythiophene, polyacetylene, or polypyrrole.

Optionally, the positive electrode may further include a conductive layer, and the conductive layer is sandwiched between the positive electrode current collector and the positive electrode material layer. Composition of the conductive layer is not particularly limited in this application, and the conductive layer may be a conductive layer commonly used in the art. For example, the conductive layer may include but is not limited to the foregoing conductive agent and binder.

The negative electrode plate in this application is not particularly limited, provided that the objectives of this application can be achieved. For example, the negative electrode plate generally includes a negative electrode current collector and a negative electrode material layer. In this application, the negative electrode material layer may be provided on one or two surfaces of the negative electrode current collector in a thickness direction of the negative electrode current collector. It should be noted that the "surface" herein may be an entire region or a partial region of the negative electrode current collector. This is not particularly limited in this application, provided that the objectives of this application can be achieved.

In this application, the negative electrode current collector is not particularly limited, provided that the objectives of this application can be achieved. For example, the negative electrode current collector may include but is not limited to copper foil, copper alloy foil, nickel foil, stainless steel foil, titanium foil, nickel foam, copper foam, or a composite current collector. In this application, thickness of the negative electrode current collector is not particularly limited, provided that the objectives of this application can be achieved. For example, the thickness of the negative electrode current collector is 4 $\mu$m to 12 $\mu$m.

In this application, the negative electrode material layer includes a negative electrode active material, and the negative electrode active material is not particularly limited, provided that the objectives of this application can be achieved. For example, the negative electrode active material may include but is not limited to at least one of natural graphite, artificial graphite, mesocarbon microbeads, hard carbon, soft carbon, silicon, a silicon-carbon composite, Li-Sn alloy, Li-Sn-O alloy, Sn, SnO, $SnO_2$, spinel-structure lithiated $TiO_2$-$Li4Ti_5O_{12}$, or Li-Al alloy.

In this application, the negative electrode material layer may further include a conductive agent, and the conductive agent is not particularly limited in this application, provided that the objectives of this application can be achieved. For example, the conductive agent may include but is not limited to at least one of the foregoing conductive agents.

In this application, the negative electrode material layer may further include a binder, and the binder is not particularly limited in this application, provided that the objectives of this application can be achieved. For example, the binder may include but is not limited to at least one of the foregoing binders.

Optionally, the negative electrode may further include a conductive layer, and the conductive layer is sandwiched between the negative electrode current collector and the negative electrode material layer. Composition of the conductive layer is not particularly limited in this application, and the conductive layer may be a conductive layer commonly used in the art. The conductive layer may include but is not limited to the foregoing conductive agent and binder.

The separator is not particularly limited in this application, provided that the objectives of this application can be achieved. For example, the separator may include but is not limited to at least one of a polyethylene (PE), polypropylene (PP), and polytetrafluoroethylene-based polyolefin (PO) separator, a polyester film (for example, a polyethylene terephthalate (PET) film), a cellulose film, a polyimide film (PI), a polyamide film (PA), a spandex, an aramid film, a woven film, a non-woven film (non-woven fabric), a microporous film, a composite film, a separator paper, a laminated film, or a spinning film, and preferably PP. The separator in this application may have a porous structure, and a pore size is not particularly limited, provided that the objectives of this application can be achieved. For example, the pore size may be 0.01 $\mu$m to 1 $\mu$m. In this application, thickness of the separator is not particularly limited, provided that the objectives of this application can be achieved. For example, the thickness of the separator may be 5 $\mu$m to 500 $\mu$m.

For example, the separator may include a substrate layer and a surface treatment layer. The substrate layer may be a non-woven fabric, film, or composite film having a porous structure, and a material of the substrate layer may include but is not limited to at least one of polyethylene, polypropylene, polyethylene terephthalate, or polyimide. Optionally, a polypropylene porous film, a polyethylene porous film, a polypropylene non-woven fabric, a polyethylene non-woven fabric, or a polypropylene-polyethylene-polypropylene porous composite film may be used. Optionally, the surface treatment layer is provided on at least one surface of the substrate layer, and the surface treatment layer may be a polymer layer or an inorganic substance layer, or a layer formed by mixing a polymer and an inorganic substance.

The inorganic substance layer may include but is not limited to inorganic particles and an inorganic substance layer binder, and the inorganic particles are not particularly limited in this application. For example, the inorganic particles may include but are not limited to at least one of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The inorganic substance layer binder is not particularly limited in this application. For example, the inorganic substance layer binder may include but is not limited to at least one of polyvinylidene fluoride, vinylidene fluoride-hexafluoropropylene copolymer, polyamide, polyacrylonitrile, polyacrylate ester, polyacrylic acid, polyacrylate salt, polyvinylpyrrolidone, polyvinyl ether, polymethyl methacrylate, polytetrafluoroethylene, or polyhexafluoropropylene. The polymer layer includes a polymer, and a material of the polymer may include but is not limited to at least one of polyamide, polyacrylonitrile, acrylate polymer, polyacrylic acid, polyacrylate salt, polyvinylpyrrolidone, polyvinyl ether, polyvinylidene fluoride, or poly(vinylidene fluoride-hexafluoropropylene).

The electrochemical apparatus in this application is not particularly limited, and may include any apparatus in which an electrochemical reaction takes place. In some embodiments, the electrochemical apparatus may include but is not limited to a lithium metal secondary battery, a lithium-ion secondary battery (lithium-ion battery), a lithium polymer secondary battery, or a lithium-ion polymer secondary battery.

A preparation process of the electrochemical apparatus is well known to a person skilled in the art, and is not particularly limited in this application. For example, the preparation process may include but is not limited to the following steps: a positive electrode plate, a separator, and a negative electrode plate are stacked in sequence and go through operations such as winding and folding as needed to obtain an electrode assembly with a winding structure, the electrode assembly is put into a packaging bag, and the packaging bag is injected with an electrolyte and sealed to obtain an electrochemical apparatus; or a positive electrode, a separator, and a negative electrode are stacked in sequence, four corners of the entire laminated structure are fixed with tapes to obtain an electrode assembly with a laminated structure, the electrode assembly is put into a packaging bag, and the packaging bag is injected with an electrolyte and sealed to obtain an electrochemical apparatus. In addition, an overcurrent prevention element, a guide plate, and the like may also be placed into the packaging bag as needed, so as to prevent pressure increase, overcharge, and overdischarge inside the electrochemical apparatus.

A second aspect of this application provides an electronic apparatus, including the electrochemical apparatus according to the first aspect of this application. The electrochemical apparatus provided in this application has good high-temperature performance, so that the electronic apparatus provided in this application has longer service life and good performance.

The electronic apparatus in this application is not particularly limited, and may be any known electronic apparatus used in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, and a lithium-ion capacitor.

For the electrochemical apparatus and the electronic apparatus provided in this application, the mass percentage of the polynitrile compound is adjusted according to the mass percentage of element Co in the positive electrode active material, and the polynitrile compound is in coordination complexation with Co with other additives used in combination. In this way, structural stability of the positive electrode material with lithium highly released is significantly improved, inhibiting leaching of Co, reducing oxidization of the electrolyte by the active material, and inhibiting related side reactions, thereby effectively improving the performance of the electrochemical apparatus at high temperature.

Certainly, when any one of the products or methods of this application is implemented, all advantages described above are not necessarily demonstrated simultaneously.

## DESCRIPTION OF EMBODIMENTS

To make the objectives, technical solutions, and advantages of this application more comprehensible, the following further describes this application in detail with reference to embodiments. Apparently, the described embodiments are merely some rather than all of the embodiments of this application. All other technical solutions obtained by a person of ordinary skill in the art based on the embodiments of this application shall fall within the protection scope of this application.

It should be noted that, in specific implementations of this application, an example in which a lithium-ion battery is used as an electrochemical apparatus is used to illustrate this application. However, the electrochemical apparatus in this application is not limited to the lithium-ion battery.

### Test method and device

### High-temperature cycling performance test

The lithium-ion battery was placed in a 45°C thermostat and left standing for 30 min, so that the lithium-ion battery reached a constant temperature. The lithium-ion battery that had reached a constant temperature was charged to a voltage of 4.45 V at a constant current of 1C, then charged to a current of 0.05C at a constant voltage of 4.45 V, and discharged to a voltage of 2.8 V at a constant current of 1C. This was one charge and discharge cycle. The first cycle discharge capacity was defined as 100%. The charge and discharge cycle was repeated until the discharge capacity decayed to 80%. Then the number of cycles and a thickness swelling rate of the lithium-ion battery were recorded as indicators for evaluating cycling performance of the lithium-ion battery.

Thickness swelling rate = (thickness after cycle - initial thickness)/initial thickness $\times$ 100%.

### High-temperature storage performance test

The lithium-ion battery was placed in a 25°C thermostat and left standing for 30 min, so that the lithium-ion battery reached a constant temperature. The lithium-ion battery was charged to 4.45 V at a constant current of 1C, then charged to a current of 0.05C at a constant voltage, and discharged to 2.8 V at a constant current of 1C. The discharge capacity was recorded as an initial capacity of the lithium-ion battery. Then the lithium-ion battery was charged to 4.45 V at a constant current of 0.5C, and charged to a current of 0.05C at a constant voltage. A thickness of the battery was measured with a micrometer and recorded. The lithium-ion battery under test was transferred into a 60°C thermostat and stored there for 90 days. During this period, the thickness of the battery was measured and recorded every 3 days. After 90 days of storage, the battery was transferred into a 25°C thermostat, left standing for 1 h, and discharged to 2.8 V at a constant current of 1C. The discharge capacity then was recorded as a remaining capacity of the lithium-ion battery. The lithium-ion battery was charged to 4.45 V at a constant current of 1C, then charged to a current of 0.05C at a constant voltage, and discharged to 2.8 V at a constant current of 1C. The discharge capacity was recorded as a recoverable capacity of the lithium-ion battery. The thickness (THK) of the battery was measured, and a storage thickness swelling rate of the lithium-ion battery was calculated and used as an indicator for evaluating gas production of the lithium-ion battery under high-temperature storage.

Thickness swelling rate = [(thickness after 24 hours of storage - initial thickness)/initial thickness] $\times$ 100%.

### Direct current resistance (DCR) test at 0°C

The lithium-ion battery was placed in a 0°C low temperature box and left standing for 4 h, so that the lithium-ion battery reached a constant temperature. The lithium-ion battery was charged to a voltage of 4.45 V at a constant current of 0.1C, then charged to a current of 0.05C at a constant voltage, left standing for 10 min, and then discharged to 3.4 V at a constant current of 0.1C. A capacity at this time was recorded as an actual discharge capacity $D_0$. Then the lithium-ion battery was left standing for 5 min, charged to 4.45 V at a constant current of 0.1C, charged to a current of 0.05C (the current was calculated based on a capacity corresponding to $D_0$) at a constant voltage, left standing for 10 min, and then discharged at a constant current of 0.1C for 3 h (the current was calculated based on the capacity corresponding to $D_0$). A voltage V1 at this time was recorded. Then the lithium-ion battery was discharged at a constant current of 1C for 1s (a sample was collected every 10 ms, and the current was correspondingly calculated based on a marked capacity of the cell). A voltage V2 at this time was recorded. A direct current resistance corresponding to a 70% remaining power (SOC) state of the cell was calculated, and the calculation formula is as follows:

$$70\% \text{SOC DCR} = (V2 - V1)/1C.$$

### Overcharge test

The lithium-ion battery was discharged to 2.8 V at 0.5C at 25°C, then charged to 5 V at a constant current of 2C, and charged at a constant voltage for 3 h. Surface temperature changes of the cell were monitored, and the pass criterion is that the cell did not catch fire, burn, or explode.

### Calendar life (ITC) test

The lithium-ion battery was placed in a 45°C thermostat and left standing for 30 min, so that the lithium-ion battery reached a constant temperature. The lithium-ion battery that had reached a constant temperature was charged to a voltage of 4.45 V at a constant current of 1C, and then charged to a current of 0.05C at a constant voltage of 4.45 V. An initial thickness of the battery was measured with a micrometer and recorded. The lithium-ion battery was left standing for 24 h at 45°C, and then discharged to a voltage of 2.8 V at a constant current of 1C. This was one charge and discharge cycle. The first cycle discharge capacity was defined as 100%. The charge and discharge cycle was repeated until the discharge capacity decayed to 80%. Before the test was stopped, the lithium-ion battery was placed in a 25°C thermostat and left standing for 30 min, so that the lithium-ion battery reached a constant temperature. The lithium-ion battery that had reached a constant temperature was charged to a voltage of 4.45 V at a constant current of 1C, and then charged to a current of 0.05C at a constant voltage of 4.45 V (a thickness after cycles of the battery was measured with the micrometer and recorded). The number of cycles was recorded as an indicator for evaluating calendar life of the lithium-ion battery.

Thickness swelling rate = [(thickness after cycles - initial thickness)/initial thickness] $\times$ 100%.

### Floating charge performance test (CV test)

The lithium-ion battery was placed in a 25°C thermostat and left standing for 30 min, so that the lithium-ion battery reached a constant temperature. The lithium-ion battery was charged to a voltage of 4.45 V at a constant current of 1C, and then charged to a current of 0.05C at a constant voltage. An initial thickness of the battery was measured with a micrometer and recorded. The lithium-ion battery under test was transferred into a 45°C thermostat and constantly charged at a current of 1C for 60 days. After that, the battery was transferred into a 25°C thermostat, and the thickness of the battery was tested and recorded as a thickness after 60 days of floating charge. A thickness swelling rate of the lithium-ion battery during the floating charge test was calculated and used as an indicator for evaluating floating charge performance of the lithium-ion battery.

Thickness swelling rate = [(thickness after 60 days of floating charge - initial thickness) / initial thickness] $\times$ 100%.

**Thermal stability test (DSC test) of positive electrode plate**

The lithium-ion battery was placed in a 25°C thermostat and left standing for 30 min, so that the lithium-ion battery reached a constant temperature. The lithium-ion battery was charged to 4.45 V at a constant current of 1C, and then charged to a current of 0.05C at a constant voltage. The positive electrode plate of the battery was removed and soaked in dimethyl carbonate (DMC) for 24 h, with a differential scanning calorimeter used for the DSC test, and then heated to 400°C at a rate of 2°C/min. Main thermal reaction peaks of the positive electrode plate and corresponding temperatures Ts were recorded.

**Example 1-1**

(1) Preparation of positive electrode plate

A positive electrode active material lithium nickel manganese cobalt ternary material (NCM613), a conductive agent Super P, and a binder polyvinylidene fluoride were mixed at a mass ratio of 97:1.4:1.6, added with N-methylpyrrolidone (NMP), and stirred to a uniform transparent system by using a vacuum stirrer to obtain a positive electrode slurry with a solid content of 72 wt%. The positive electrode slurry was uniformly applied onto a positive electrode current collector aluminum foil with a thickness of 12 $\mu$m. The aluminum foil was dried at 85°C, followed by cold pressing to obtain a positive electrode plate having a positive electrode active material layer with a thickness of 100 $\mu$m. Then the foregoing steps were repeated on another surface of the positive electrode plate to obtain a positive electrode plate coated with positive electrode active material layers on two surfaces. The positive electrode plate was cut into a size of 74 mm $\times$ 867 mm and then welded with tabs for use.

(2) Preparation of negative electrode plate

A negative electrode active material artificial graphite, a conductive agent Super P, sodium carboxymethyl cellulose (CMC), and styrene butadiene rubber (SBR) were mixed at a mass ratio of 96.4:1.5:0.5:1.6, added with deionized water as a solvent, and uniformly stirred to obtain a slurry with a solid content of 54 wt%. The slurry was uniformly applied onto one surface of copper foil with a thickness of 8 $\mu$m. The copper foil was dried at 110°C, followed by cold pressing to obtain a negative electrode plate with one surface coated with a negative electrode active material layer with a thickness of 150 $\mu$m. Then the foregoing coating steps were repeated on another surface of the negative electrode plate to obtain a negative electrode plate coated with negative electrode active material layers on two surfaces. The negative electrode plate was cut into a size of 74 mm $\times$ 867 mm and then welded with tabs for use.

(3) Preparation of electrolyte

In an argon atmosphere glove box with a moisture content less than 10 ppm, ethylene carbonate (EC), propylene carbonate (PC), ethyl methyl carbonate (EMC), and diethyl carbonate (DEC) were uniformly mixed at a mass ratio of EC:PC:EMC:DEC = 10:30:30:30 to form a base solvent, and then a polynitrile compound and a lithium salt $LiPF_6$ were added according to Table 1 for dissolution. The mixture was uniformly stirred to obtain an electrolyte, where the polynitrile compound included adiponitrile (AND), 1,2-bis(cyanoethoxy)ethane (DENE), and 1,3,6-hexanetricarbonitrile (HTCN), a mass ratio of these polynitrile compounds was AND:DENE:HTCN = 1:1:1, and a mass percentage of $LiPF_6$ was 12.5%.

(4) Separator

A polyethylene porous polymer film with a thickness of 7 $\mu$m was used as a separator.

(5) Preparation of lithium-ion battery

The positive electrode plate, the separator, and the negative electrode plate were stacked in sequence so that the separator was sandwiched between the positive electrode plate and the negative electrode plate for separation. Then, the resulting stack was wound to form a bare cell. After tabs were welded, the bare cell was placed in an outer packaging aluminum foil film, edges of the aluminum foil bag were sealed, and then the bag was placed in an 85°C vacuum oven for drying for 12 h to remove moisture in the dry cell. The prepared electrolyte was injected into the dried bare cell, followed by processes such as vacuum packaging, standing, formation, and shaping to complete preparation of a lithium-ion battery (with a thickness of 3.3 mm, a width of 39 mm, and a length of 96 mm).

**Examples 1-2 to 1-13**

Examples 1-2 to 1-13 were the same as Example 1-1 except for the related preparation parameters and performance parameters as shown in Table 1.

**Comparative Examples 1-1 to 1-7**

Comparative Examples 1-1 to 1-7 were the same as Example 1-1 except for the related preparation parameters and performance parameters as shown in Table 1.

**Table 1**

| Example | Mass percentage of LCO | Mass percentage of NCM613 | Mass percentage a of element Co | Mass percentage b of polynitrile compound (%) | Mass percentage c of EC (%) | Cycles at 45°C | Cycles for ITC | Thickness swelling rate for ITC (%) | Thickness swelling rate under high-temperature storage (%) | Thickness swelling rate in floating charge test (%) | Direct current resistance at 0°C (mΩ) | Overcharge test |
|---|---|---|---|---|---|---|---|---|---|---|---|---|
| Example 1-1 | 0 | 1 | 0.06 | 1 | 8.65 | 413 | 45 | 24 | 36 | 30 | 93 | 4 |
| Example 1-2 | 0 | 1 | 0.06 | 2 | 8.55 | 346 | 40 | 26 | 33 | 22 | 96 | 8 |
| Example 1-3 | 0.4 | 0.6 | 0.28 | 1.1 | 8.64 | 442 | 45 | 41 | 27 | 28 | 90 | 4 |
| Example 1-4 | 0.4 | 0.6 | 0.28 | 2 | 8.55 | 397 | 52 | 28 | 20 | 22 | 92 | 6 |
| Example 1-5 | 0.4 | 0.6 | 0.28 | 3 | 8.45 | 365 | 67 | 19 | 11 | 14 | 95 | 8 |
| Example 1-6 | 0.4 | 0.6 | 0.28 | 4 | 8.35 | 307 | 57 | 24 | 8 | 9 | 97 | 8 |

| Example | Mass percentage of LCO | Mass percentage of NCM613 | Mass percentage a of element Co | Mass percentage b of polynitrile compound (%) | Mass percentage c of EC (%) | Cycles at 45°C | Cycles for ITC | Thickness swelling rate for ITC (%) | Thickness swelling rate under high-temperature storage (%) | Thickness swelling rate in floating charge test (%) | Direct current resistance at 0°C (mΩ) | Overcharge test |
|---|---|---|---|---|---|---|---|---|---|---|---|---|
| Example 1-7 | 0.7 | 0.3 | 0.44 | 3 | 8.45 | 375 | 51 | 17 | 10 | 12 | 93 | 8 |
| Example 1-8 | 0.7 | 0.3 | 0.44 | 4 | 8.35 | 338 | 64 | 13 | 8 | 10 | 96 | 8 |
| Example 1-9 | 0.7 | 0.3 | 0.44 | 5 | 8.25 | 286 | 63 | 15 | 6 | 8 | 99 | 8 |
| Example 1-10 | 0.7 | 0.3 | 0.44 | 5.7 | 8.18 | 265 | 60 | 20 | 5 | 7 | 101 | 7 |
| Example 1-11 | 1 | 0 | 0.6 | 4.5 | 8.3 | 314 | 59 | 31 | 11 | 15 | 92 | 8 |
| Example 1-12 | 1 | 0 | 0.6 | 6 | 8.15 | 284 | 68 | 14 | 7 | 11 | 96 | 8 |
| Example 1-13 | 1 | 0 | 0.6 | 7 | 8.05 | 251 | 65 | 18 | 5 | 7 | 100 | 8 |
| Comparative Example 1-1 | 0 | 1 | 0.06 | 3 | 8.45 | 251 | 24 | 78 | 33 | 38 | 98 | 8 |

| Example | Mass percentage of LCO | Mass percentage of NCM613 | Mass percentage a of element Co | Mass percentage b of polynitrile compound (%) | Mass percentage c of EC (%) | Cycles at 45°C | Cycles for ITC | Thickness swelling rate for ITC (%) | Thickness swelling rate under high-temperature storage (%) | Thickness swelling rate in floating charge test (%) | Direct current resistance at 0°C (mΩ) | Overcharge test |
|---|---|---|---|---|---|---|---|---|---|---|---|---|
| Comparative Example 1-2 | 0.4 | 0.6 | 0.28 | 0 | 8.75 | 457 | 36 | 56 | 41 | 52 | 87 | 1 |
| Comparative Example 1-3 | 0.4 | 0.6 | 0.28 | 5 | 8.25 | 271 | 48 | 61 | 21 | 17 | 95 | 8 |
| Comparative Example 1-4 | 0.7 | 0.3 | 0.44 | 2.5 | 8.5 | 397 | 33 | 68 | 35 | 31 | 91 | 7 |
| Comparative Example 1-5 | 0.7 | 0.3 | 0.44 | 6 | 8.15 | 215 | 42 | 61 | 15 | 14 | 104 | 5 |
| Comparative Example 1-6 | 1 | 0 | 0.6 | 4 | 8.35 | 336 | 37 | 57 | 30 | 32 | 90 | 8 |
| Comparative Example 1-7 | 1 | 0 | 0.6 | 8 | 7.95 | 182 | 45 | 48 | 13 | 26 | 105 | 7 |

It can be learned from Examples 1-1 to 1-13 and Comparative Examples 1-1 to 1-7 that element Co in the positive electrode active material and the polynitrile compound generally affect high-temperature cycling performance and high-temperature storage performance of the lithium-ion battery. For the lithium-ion battery with the mass percentage a of element Co in the positive electrode active material and the mass percentage b% of the polynitrile compound being within the ranges defined in this application as well as b and a satisfying the relational expression in claim 1 of this application, complexation between a cyano group in the polynitrile compound and Co strengthens structural stability, so that the prepared lithium-ion battery has good ITC performance, high-temperature cycling performance, and high-temperature storage performance.

**Examples 2-1 to 2-10**

Examples 2-1 to 2-10 were the same as Example 1-5 except for the related preparation parameters and performance parameters as shown in Table 2.

Table 2

| Example | Example 2-1 | Example 2-2 | Example 2-3 | Example 2-4 | Example 2-5 |
|---|---|---|---|---|---|
| Mass percentage a of element Co | 0.28 | 0.28 | 0.28 | 0.28 | 0.28 |
| Mass percentage b1 of dinitrile compound (%) | / | / | 2 | 1.5 | 1 |
| Mass percentage b2 of trinitrile compound (%) | 3 | 3 | 1 | 1.5 | 2 |
| b1 + b2 (%) | 3 | 3 | 3 | 3 | 3 |
| b1 /b2 | 0 | 0 | 2 | 1 | 0.5 |
| Mass percentage of AND (%) | / | / | 2 | 2 | 1 |
| Mass percentage of SN (%) | / | / | / | / | / |
| Mass percentage of DENE (%) | / | / | / | / | / |
| Mass percentage of HEDN (%) | / | / | / | / | / |
| Mass percentage of HTCN (%) | 3 | / | 1 | 2 | 2 |
| Mass percentage of TCEP (%) | / | 3 | / | / | / |
| Cycles at 45°C | 537 | 531 | 385 | 432 | 495 |
| Cycles for ITC | 91 | 88 | 60 | 67 | 80 |
| Thickness swelling rate for ITC (%) | 12 | 13 | 18 | 15 | 13 |
| Thickness swelling rate under high-temperature storage (%) | 6 | 7 | 14 | 10 | 8 |
| Thickness swelling rate in floating charge test (%) | 10 | 12 | 16 | 12 | 10 |
| Direct current resistance at 0°C (mΩ) | 98 | 99 | 91 | 93 | 96 |
| Overcharge test | 9 | 9 | 6 | 8 | 9 |

| Example | Mass percentage a of element Co | Mass percentage b1 of dinitrile compound (%) | Mass percentage b2 of trinitrile compound (%) | b1 + b2 (%) | b1 /b2 | Mass percentage of AND (%) | Mass percentage of SN (%) | Mass percentage of DENE (%) | Mass percentage of HEDN (%) | Mass percentage of HTCN (%) | Mass percentage of TCEP (%) | Cycles at 45°C | Cycles for ITC | Thickness swelling rate for ITC (%) | Thickness swelling rate under high-temperature storage (%) | Thickness swelling rate in floating charge test (%) | Direct current resistance at 0°C (mΩ) | Overcharge test |
|---|---|---|---|---|---|---|---|---|---|---|---|---|---|---|---|---|---|---|
| Example 2-6 | 0.28 | 1.5 | 1.5 | 3 | 1 | / | 2 | / | / | 2 | / | 418 | 63 | 17 | 12 | 13 | 92 | 8 |
| Example 2-7 | 0.28 | 1.5 | 1.5 | 3 | 1 | / | / | 2 | / | 2 | / | 435 | 70 | 13 | 8 | 9 | 94 | 8 |
| Example 2-8 | 0.28 | 1.5 | 1.5 | 3 | 1 | / | / | / | 1.5 | 2 | / | 485 | 82 | 12 | 7 | 9 | 103 | 8 |
| Example 2-9 | 0.28 | 2 | 1.5 | 3.5 | 1.3 | 1 | / | 1 | / | 2 | / | 446 | 85 | 11 | 7 | 8 | 96 | 8 |
| Example 2-10 | 0.28 | 2 | 1.5 | 3.5 | 1.3 | / | 1 | 1 | / | 2 | / | 421 | 81 | 13 | 7 | 9 | 96 | 8 |

In Table 2, "/" means that a corresponding preparation parameter is not present.

It can be learned from Examples 2-1 to 2-10 that the type and mass percentage of the polynitrile compound generally also affect the high-temperature performance of the lithium-ion battery. The mass percentage of the polynitrile compound and the ratio (b1/b2) of the mass percentages of the dinitrile compound and the trinitrile compound affect the high-temperature cycling performance and high-temperature storage performance of the lithium-ion battery. It can be learned from Examples 2-1 to 2-5 that with the increase of the proportion of the trinitrile compound in the polynitrile compound, the high-temperature cycling performance and high-temperature storage performance of the lithium-ion battery are better improved.

**Examples 3-1 to 3-8**

Examples 3-1 to 3-8 were the same as Example 1-3 except for the related preparation parameters and performance parameters as shown in Table 3, where in the process of changing the mass percentage of EC, the sum of the mass percentages of EC and PC remained 40%.

**Comparative Example 3-1**

Comparative Example 3-1 was the same as Example 1-3 except for the related preparation parameters and performance parameters as shown in Table 3.

## Table 3

| Example | Mass percentage a of element Co | Mass percentage b of polynitrile compound (%) | Mass percentage c of EC (%) | c/b | Cycles at 45°C | Cycling thickness swelling rate at 45°C (%) | Thickness swelling rate for ITC (%) | Thickness swelling rate under high-temperature storage (%) | Thickness swelling rate in floating charge test (%) |
|---|---|---|---|---|---|---|---|---|---|
| Example 3-1 | 0.28 | 1.1 | 10 | 9.1 | 326 | 16 | 38 | 43 | 31 |
| Example 3-2 | 0.28 | 2 | 10 | 5 | 335 | 14 | 51 | 25 | 19 |
| Example 3-3 | 0.28 | 3 | 10 | 3.3 | 319 | 15 | 69 | 10 | 10 |
| Example 3-4 | 0.28 | 4 | 10 | 2.5 | 301 | 16 | 68 | 12 | 7 |
| Example 3-5 | 0.28 | 3 | 5 | 1.7 | 279 | 29 | 48 | 17 | 7 |
| Example 3-6 | 0.28 | 3 | 15 | 5 | 368 | 13 | 69 | 11 | 12 |
| Example 3-7 | 0.28 | 3 | 20 | 6.7 | 365 | 25 | 67 | 19 | 18 |
| Example 3-8 | 0.28 | 3 | 30 | 10 | 297 | 17 | 35 | 67 | 42 |
| Comparative Example 3-1 | 0.28 | 4.5 | 5 | 1.1 | 128 | 55 | 37 | 48 | 10 |

It can be learned from Examples 3-1 to 3-8 and Comparative Example 3-1 that the polynitrile compound and EC generally also affect the high-temperature cycling performance and high-temperature storage performance of the lithium-ion battery. The lithium-ion battery having the polynitrile compound and EC and with the ratio (c/b) of the mass percentages of the polynitrile compound and EC being within the ranges defined in this application has better high-temperature cycling performance and high-temperature storage performance.

**Examples 4-1 to 4-5**

Examples 4-1 to 4-5 were the same as Example 1-4 except that the mass percentage of $LiPO_2F_2$ was adjusted according to Table 4.

## Table 4

| Example | Mass percentage a of element Co | Mass percentage b of polynitrile compound (%) | Mass percentage d of LiPO$_2$F$_2$ (%) | Cycles at 45°C | Cycles for ITC | Thickness swelling rate for ITC (%) | Thickness swelling rate under high-temperature storage (%) | Thickness swelling rate in floating charge test (%) | Direct current resistance at 0°C (mΩ) |
|---|---|---|---|---|---|---|---|---|---|
| Example 4-1 | 0.28 | 2 | 0.01 | 411 | 54 | 23 | 18 | 20 | 90 |
| Example 4-2 | 0.28 | 2 | 0.1 | 438 | 60 | 18 | 15 | 18 | 87 |
| Example 4-3 | 0.28 | 2 | 0.3 | 515 | 75 | 12 | 10 | 12 | 85 |
| Example 4-4 | 0.28 | 2 | 0.5 | 587 | 88 | 8 | 7 | 10 | 82 |
| Example 4-5 | 0.28 | 2 | 1 | 590 | 90 | 6 | 6 | 8 | 82 |

It can be learned from Examples 4-1 to 4-5 that LiPO$_2$F$_2$ generally also affects the high-temperature cycling performance and high-temperature storage performance of the lithium-ion battery. With the increase of the mass percentage of LiPO$_2$F$_2$, LiPO$_2$F$_2$ forms a low-impedance cathode-electrolyte interface (CEI) on the surface of the positive electrode, so that leaching of Co is inhibited and a stable SEI film is formed on the negative electrode, which effectively improves the high-temperature cycling performance and ITC performance of the lithium-ion battery. In addition, due to strong water absorption of LiPO$_2$F$_2$, LiPO$_2$F$_2$ is coordinated with the polynitrile compound so that the polynitrile compound can better perform its role, improving the high-temperature storage and high-temperature cycling performance of the lithium-ion battery.

The lithium-ion batteries prepared in Examples 1-4 to 1-7 were further fully charged and then disassembled so as to obtain the positive electrode plates, and the positive electrode plates were subjected to the DSC test, with the obtained performance test results shown in Table 5.

## Table 5

| Example | Mass percentage a of element Co | Mass percentage b of polynitrile compound (%) | Temperature of main exothermic peak 1 in DSC (°C) | Temperature of main exothermic peak 2 in DSC (°C) |
|---|---|---|---|---|
| Example 1-4 | 0.28 | 1.1 | 306 | 265 |
| Example 1-5 | 0.28 | 2 | 311 | 269 |

(continued)

| Example | Mass percentage a of element Co | Mass percentage b of polynitrile compound (%) | Temperature of main exothermic peak 1 in DSC (°C) | Temperature of main exothermic peak 2 in DSC (°C) |
|---|---|---|---|---|
| Example 1-6 | 0.28 | 3 | 315 | 273 |
| Example 1-7 | 0.28 | 4 | 318 | 275 |

It can be learned from the DSC test results of the positive electrode plates in Examples 1-4 to 1-7 that due to coordination complexation between the polynitrile compound and Co, stability of the positive electrode active material is improved, and a thermal failure temperature of the positive electrode with lithium released is significantly increased with the addition of the polynitrile compound.

**Examples 5-1 to 5-7**

Examples 5-1 to 5-7 were the same as Example 1-4 except that fluoroethylene carbonate (FEC), vinylene carbonate (VC), propylene sulfite (PS), ethylene sulfate (DTD), lithium difluoro(oxalato)borate (LiDFOB), or lithium bis(oxalato)borate (LiBOB) were added and the mass percentages of the corresponding substances were adjusted according to Table 6.

**Table 6**

| Example | Mass percentage of element Co | Mass percentage b of polynitrile compound (%) | Mass percentage of FEC (%) | Mass percentage of VC (%) | Mass percentage of PS (%) | Mass percentage of DTD (%) | Mass percentage of LiDFOB (%) | Mass percentage of LiBOB (%) | Cycles at 45°C | Cycles for ITC | Thickness swelling rate for ITC (%) | Thickness swelling rate under high-temperature storage (%) | Thickness swelling rate in floating charge test (%) | Direct current resistance at 0°C (mΩ) | Overcharge test |
|---|---|---|---|---|---|---|---|---|---|---|---|---|---|---|---|
| Example 5-1 | 0.28 | 2 | 2 | / | / | / | / | / | 481 | 58 | 18 | 21 | 24 | 90 | 6 |
| Example 5-2 | 0.28 | 2 | / | 0.5 | / | / | / | / | 503 | 63 | 15 | 19 | 21 | 92 | 6 |
| Example 5-3 | 0.28 | 2 | / | / | 3 | / | / | / | 478 | 80 | 12 | 12 | 15 | 90 | 9 |
| Example 5-4 | 0.28 | 2 | / | / | / | 0.5 | / | / | 511 | 83 | 11 | 13 | 16 | 86 | 8 |
| Example 5-5 | 0.28 | 2 | / | / | / | / | 0.5 | / | 497 | 60 | 12 | 15 | 14 | 88 | 7 |

| Example | Example 5-6 | Example 5-7 |
|---|---|---|
| Mass percentage of element Co | 0.28 | 0.28 |
| Mass percentage b of polynitrile compound (%) | 2 | 2 |
| Mass percentage of FEC (%) | / | 2 |
| Mass percentage of VC (%) | / | 0.5 |
| Mass percentage of PS (%) | / | 3 |
| Mass percentage of DTD (%) | / | 0.5 |
| Mass percentage of LiDFOB (%) | / | 0.5 |
| Mass percentage of LiBOB (%) | 0.5 | 0.5 |
| Cycles at 45°C | 538 | 1215 |
| Cycles for ITC | 88 | 147 |
| Thickness swelling rate for ITC (%) | 9 | 7 |
| Thickness swelling rate under high-temperature storage (%) | 12 | 8 |
| Thickness swelling rate in floating charge test (%) | 12 | 8 |
| Direct current resistance at 0°C (mΩ) | 90 | 89 |
| Overcharge test | 8 | 10 |

In Table 6, "/" means that a corresponding preparation parameter is not present.

It can be learned from Examples 5-1 to 5-7 that the lithium-ion battery having FEC, VC, PS, DTD, LiDFOB, and LiBOB as the additives can form stable CEI and SEI films on the surfaces of the positive electrode and the negative electrode, inhibiting side reactions between the positive electrode, the negative electrode, and the electrolyte. In addition, due to coordination between the additives and the polynitrile compound, damage caused by reductive decomposition of the polynitrile compound on the negative electrode interface to the SEI film can be effectively inhibited, better improving the high-temperature cycling performance, floating charge performance, safety performance, and high-temperature storage performance of the lithium-ion battery, and reducing direct current resistance of the lithium-ion battery.

The foregoing descriptions are merely preferred examples of this application, and are not intended to limit the protection scope of this application. Any modification, equivalent replacement, improvement, or the like made without departing from the spirit and principle of this application shall fall within the protection scope of this application.

**Claims**

1. An electrochemical apparatus, comprising a positive electrode plate, a negative electrode plate, a separator, and an electrolyte, wherein the positive electrode plate comprises a positive electrode active material, the positive electrode active material comprises element Co, and based on a total mass of the positive electrode active material, a mass percentage of element Co is a; and the electrolyte comprises a polynitrile compound, and based on a total mass of the electrolyte, a mass percentage of the polynitrile compound is b%; wherein the mass percentage b% of the polynitrile compound and the mass percentage a of element Co satisfy $b = 9.7a - 0.07 + C$, wherein $-1.5 < C \leq 1.5$, and $0 < a \leq 0.65$.

2. The electrochemical apparatus according to claim 1, wherein based on the total mass of the electrolyte, the mass percentage b% of the polynitrile compound satisfies $0 < b \leq 7$.

3. The electrochemical apparatus according to claim 1, wherein the polynitrile compound comprises a dinitrile compound and/or a trinitrile compound, and based on the total mass of the electrolyte, a mass percentage of the dinitrile compound is b1%, and a mass percentage of the trinitrile compound is b2%, wherein b1 and b2 satisfy $0 \leq b1/b2 \leq 4$.

4. The electrochemical apparatus according to claim 3, wherein the dinitrile compound comprises at least one of succinonitrile, adiponitrile, 1,2-bis(cyanoethoxy)ethane, or 1,4-dicyano-2-butene, and the trinitrile compound comprises at least one of 1,3,6-hexanetricarbonitrile or 1,2,3-tris(2-cyanoethoxy)propane.

5. The electrochemical apparatus according to claim 1, wherein the electrolyte satisfies at least one of the following conditions:

   (1) the electrolyte further comprises ethylene carbonate, and based on the total mass of the electrolyte, a mass percentage of the ethylene carbonate is c%, wherein c satisfies $0.5 \leq c/b \leq 20$, and $3 \leq c \leq 30$;
   (2) the electrolyte comprises lithium difluorophosphate, and based on the total mass of the electrolyte, a mass percentage of the lithium difluorophosphate is d%, wherein d satisfies $0.01 \leq d \leq 1$;
   (3) the electrolyte comprises lithium difluorophosphate, and based on the total mass of the electrolyte, a mass percentage of the lithium difluorophosphate is d%, wherein d satisfies $0.015 \leq d/a$; or
   (4) the electrolyte comprises at least one of fluoroethylene carbonate, vinylene carbonate, propylene sulfite, ethylene sulfate, lithium difluoro(oxalato)borate, or lithium bis(oxalato)borate.

6. The electrochemical apparatus according to claim 1, wherein the electrolyte comprises a lithium salt, the lithium salt comprises at least one of an inorganic salt or an organic lithium salt, and based on the total mass of the electrolyte, a mass percentage of the lithium salt is 7.5% to 25%.

7. The electrochemical apparatus according to claim 6, wherein the lithium salt comprises at least one of lithium hexafluorophosphate, lithium tetrafluoroborate, lithium hexafluoroarsenate, lithium perchlorate, lithium bis(fluorosulfonyl)imide, or lithium bistrifluoromethanesulfonimide.

8. The electrochemical apparatus according to claim 1, wherein the electrolyte further comprises at least one of dimethyl carbonate, ethyl methyl carbonate, diethyl carbonate, propylene carbonate, ethyl acetate, ethyl propionate, or propyl propionate.

9. The electrochemical apparatus according to claim 1, wherein a differential scanning calorimetry curve of the positive electrode plate comprises at least one main exothermic peak.

10. The electrochemical apparatus according to claim 9, wherein in the differential scanning calorimetry curve, temperature of the main exothermic peak is T°C, and T satisfies T = 10b + 267 + X, wherein $-20 \leq X \leq 20$, $0 < b \leq 7$, and $200 \leq T \leq 360$.

11. An electronic apparatus, comprising the electrochemical apparatus according to any one of claims 1 to 10.

## INTERNATIONAL SEARCH REPORT

| International application No. |
| --- |
| **PCT/CN2022/122164** |

| A. | CLASSIFICATION OF SUBJECT MATTER |
| --- | --- |
| | H01M 4/525(2010.01)i; H01M 10/0567(2010.01)i; H01M 10/0525(2010.01)i |

According to International Patent Classification (IPC) or to both national classification and IPC

| B. | FIELDS SEARCHED |
| --- | --- |

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; WPABS; VEN; ENTXT; CNKI: 正极, 阴极, 钴, Co, 二腈, 三腈, 二氟磷酸锂, positive electrode, cathode, cobalt, dinitrile, trinitrile, lithium difluorophosphate

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| E | CN 115347241 A (NINGDE AMPEREX TECHNOLOGY LTD.) 15 November 2022 (2022-11-15) description, paragraphs 30-123 | 1-8, 11 |
| PX | CN 114068910 A (NINGDE AMPEREX TECHNOLOGY LTD.) 18 February 2022 (2022-02-18) description, paragraphs 4-111 | 1-11 |
| X | CN 113451653 A (ZHUHAI COSMX BATTERY CO., LTD.) 28 September 2021 (2021-09-28) description, paragraphs 2-78 | 1-11 |
| X | CN 113363671 A (NINGDE AMPEREX TECHNOLOGY LTD.) 07 September 2021 (2021-09-07) description, paragraphs 34-183 | 1-11 |
| X | CN 113410511 A (ZHUHAI COSMX BATTERY CO., LTD.) 17 September 2021 (2021-09-17) description, paragraphs 26-99 | 1-11 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **27 November 2022** | **28 December 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**EP 4 394 945 A1**

**INTERNATIONAL SEARCH REPORT**

International application No.

**PCT/CN2022/122164**

**C.    DOCUMENTS CONSIDERED TO BE RELEVANT**

| Category* | Citation of document, with indication, where appropriate, of the relevant passages | Relevant to claim No. |
|---|---|---|
| X | CN 111628218 A (ZHUHAI COSMX BATTERY CO., LTD.) 04 September 2020 (2020-09-04)<br>    description, paragraphs 2-94 | 1-11 |
| X | CN 113206296 A (NINGDE AMPEREX TECHNOLOGY LTD.) 03 August 2021 (2021-08-03)<br>    description, paragraphs 3-146 | 1-11 |
| A | JP 2008123714 A (SONY CORP.) 29 May 2008 (2008-05-29)<br>    entire document | 1-11 |

Form PCT/ISA/210 (second sheet) (January 2015)

24

**INTERNATIONAL SEARCH REPORT**
Information on patent family members

International application No.

**PCT/CN2022/122164**

| Patent document cited in search report | | | Publication date (day/month/year) | Patent family member(s) | | | Publication date (day/month/year) |
|---|---|---|---|---|---|---|---|
| CN | 115347241 | A | 15 November 2022 | None | | | |
| CN | 114068910 | A | 18 February 2022 | None | | | |
| CN | 113451653 | A | 28 September 2021 | None | | | |
| CN | 113363671 | A | 07 September 2021 | None | | | |
| CN | 113410511 | A | 17 September 2021 | None | | | |
| CN | 111628218 | A | 04 September 2020 | CN | 111628218 | B | 31 August 2021 |
| CN | 113206296 | A | 03 August 2021 | None | | | |
| JP | 2008123714 | A | 29 May 2008 | None | | | |

Form PCT/ISA/210 (patent family annex) (January 2015)

**REFERENCES CITED IN THE DESCRIPTION**

**Patent documents cited in the description**

- CN 202111372370